# FASCICULE DE BREVET EUROPEEN

(11) **EP 1 699 670 B1**
(45) Date de publication et mention de la délivrance du brevet: **20.08.2008**
(21) Numéro de dépôt: 04816408.1
(22) Date de dépôt: 13.12.2004
(51) Int. Cl.: B60T 13/14

(54) **SERVOMOTEUR D'ASSISTANCE AU FREINAGE ALIMENTE PAR UN CIRCUIT DE CLIMATISATION**
DURCH EINEN KLIMATISIERUNGSKREIS GESPEISTE BREMSVERSTÄRKUNGSSERVOEINHEIT
BRAKE ASSIST SERVO UNIT WHICH IS SUPPLIED BY AN AIR-CONDITIONING CIRCUIT

(30) Priorité: 24.12.2003 FR 0315494
(43) Date de publication de la demande: 13.09.2006
(73) Titulaire: ROBERT BOSCH GMBH, 70442 Stuttgart (DE)
(72) Inventeur: HURWIC, Aleksander, Bosch Systèmes de Freinage, F-93700 DRANCY (FR); FILLON, Alain, F-17220 CROIX CHAPEAU (FR)
(74) Mandataire: Hurwic, Aleksander Wiktor
(86) Numéro de dépôt international: PCT/FR2004/003272
(87) Numéro de publication internationale: WO 2005/070740

(56) Documents cités:
- EP-A- 0 171 585
- WO-A-98/35849
- Hyundai Motor Company: "BRAKE BOOSTER WITH USING THE HIGH-PRESSURE REFRIGERANT OF AIR CONDITIONER" KOREAN PATENT ABSTRACTS, numéro de publication 00205871 B1, 6-Avril-1999 (06.04.1999) Source: internet http://eng.kipris.or.kr/ website de "Korean Institute for Patent Information (KIPI)" XP002289281
- Hyundai Motor Company: "AUXILIARY BRAKE SYSTEM BY USING AIR CONDITIONER COMPRESSOR" KOREAN PATENT ABSTRACTS, numéro de publication 00187164 B1, 30-Décembre-1998 (30-12-1998) Source: internet http://eng.kipris.or.kr/ website de "Korean Institute for Patent Information (KIPI)" XP002289282
- PATENT ABSTRACTS OF JAPAN vol. 2003, no. 08, 6 août 2003 (2003-08-06) & JP 2003 104046 A (MITSUBISHI AUTOMOB ENG CO LTD; MITSUBISHI MOTORS CORP), 9 avril 2003 (2003-04-09)

## Description

L'invention concerne, de façon générale, les techniques de freinage appliquées aux véhicules automobiles.

Plus précisément, l'invention concerne un dispositif de freinage pour un véhicule automobile équipé d'un circuit de climatisation renfermant un fluide réfrigérant, un compresseur et un détendeur, ce dispositif incluant lui-même une première source de fluide délivrant sélectivement un fluide gazeux à pression relativement élevée, une seconde source de fluide délivrant sélectivement le fluide gazeux à pression relativement basse, et un servomoteur pneumatique d'assistance au freinage comprenant une chambre de travail de volume variable et un clapet de commande sélectivement actionné par une première ou une seconde sollicitations pour relier respectivement la chambre de travail à la première ou à la seconde source de fluide.

Le document EP-A-0171585 décrit un dispositif de freinage comme défini dans le préambule de la revendication 1.

Le document de Hyundai Motor Company avec le titre: "BRAKE BOOSTER WITH USING THE HIGH-PRESSURE REFRIGERANT OF AIR CONDITIONER", KOREAN PATENT ABSTRACTS, numéro de publication 00205871 B1, 6-Avril-1999 (06.04.1999) (source: internet http://eng.kipris.or.kr/ website de "Korean Institute for Patent Information (KIPI)") décrit un servomoteur de freinage incluant une source de fluide qui comprend une première portion d'un circuit de climatisation, disposée en aval d'un compresseur et en amont d'un détendeur, dans un sens de circulation du fluide réfrigérant dans un circuit de climatisation.

L'industrie automobile évolue depuis plusieurs années à la poursuite de plusieurs ' objectifs majeurs, qui incluent notamment la recherche d'une sécurité optimale et celle d'un confort accru.

Cet état de faits conduit à recourir, sur les véhicules automobiles actuels, à un nombre croissant d'organes nouveaux liés soit à la sécurité, soit au confort.

Or cette évolution est ralentie par deux autres contraints auxquelles est soumise l'industrie automobile, à savoir l'allègement des véhicules et, corrélativement, la réduction de leur consommation énergétique.

L'invention, qui s'inscrit dans ce contexte, a pour but de repousser les limites de ce délicat compromis.

A cette fin, le dispositif de l'invention, par ailleurs conforme à la définition générique qu'en donne le préambule ci-dessus, est essentiellement caractérisé par la partie caractérisante de la revendication 1.

De préférence, la seconde source de fluide comprend une seconde portion du circuit de climatisation, disposée en aval du détendeur et en amont du compresseur dans le sens de circulation du fluide réfrigérant.

De manière avantageuse, la première portion du circuit de climatisation peut comprendre un accumulateur haute pression, la seconde portion du circuit de climatisation pouvant quant à elle comprendre un accumulateur basse pression.

Le servomoteur peut en outre disposer d'un clapet actif, du type décrit par exemple dans les brevets US-5 172 964, FR-2 724 356, ou EP-A-0 171 585, et susceptible d'être commandé par un signal, en général de nature électrique, pour provoquer l'actionnement du servomoteur.

Dans ce cas, le clapet est donc sensible à un signal d'actionnement présentant sélectivement au moins un premier état ou un second état, et les premier et second états de ce signal d'actionnement constituent respectivement les première et seconde sollicitations pour le clapet.

Dans le cas classique où le dispositif de freinage comprend au moins deux moteurs de frein mus par le servomoteur et adoptant sélectivement un état actif ou un état passif, ce dispositif peut aussi comprendre un générateur de signal de commande propre à produire sélectivement un signal de commande, et un circuit de combinaison de signaux, ce circuit de combinaison de signaux délivrant au clapet le signal d'actionnement dans son premier état en réponse à la détection simultanée du signal de commande et de l'état passif des moteurs de frein.

Un tel agencement permet ainsi de doter le dispositif de l'invention d'une fonction de frein de parking à énergie auxiliaire, par exemple électrique.

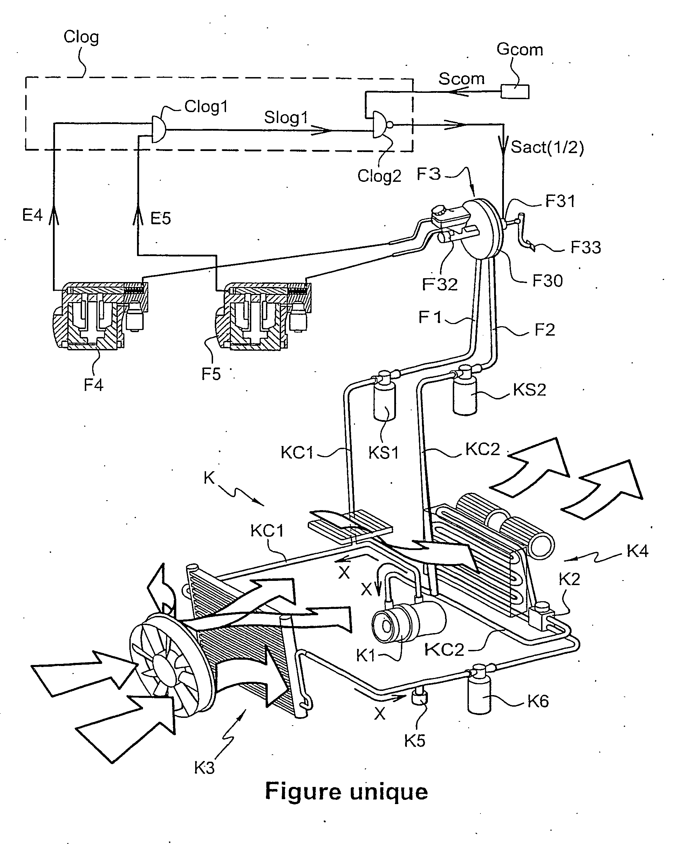

D'autres caractéristiques et avantages de l'invention ressortiront clairement de la description qui en est faite ci-après, à titre indicatif et nullement limitatif, en référence au dessin unique annexé, qui représente de façon schématique un dispositif conforme à l'invention.

Comme annoncé précédemment, l'invention concerne un dispositif de freinage pour un véhicule automobile équipé d'un circuit de climatisation K.

De façon traditionnelle, un tel circuit de climatisation comprend une canalisation dans laquelle circule un fluide réfrigérant gazeux à la température et à la pression ambiantes, un compresseur K1, un détendeur K2, un système K3 de condensation et d'extraction de calories, un système K4 d'évaporation et d'extraction de frigories, un pressostat K5 et une bouteille de réserve de fluide K6.

Dans la canalisation de ce circuit K, le fluide réfrigérant circule, suivant un sens de circulation X et suivant une évolution globalement décroissante de sa pression et de sa température, depuis une première portion KC1 du circuit de climatisation K, disposée en aval du compresseur K1 et en amont du détendeur K2, jusque dans une seconde portion KC2 du circuit de climatisation, disposée en aval du détendeur K2 et en amont du compresseur K1.

Le dispositif de freinage inclut, de façon connue, deux sources de fluide F1 et F2 délivrant à volonté un fluide gazeux à des pressions respectivement relativement élevée et relativement basse, ainsi qu'un servomoteur pneumatique d'assistance au freinage F3.

Le servomoteur comprend au moins une chambre de travail F30 de volume variable et un clapet de commande F31 dont le rôle est de relier la chambre de travail F30 à la source de fluide haute pression F1 ou à la source de fluide basse pression F2 en réponse respectivement à une première ou à une seconde sollicitations qu'il reçoit, par exemple sous la forme de forces antagonistes d'actionnement et de rappel agissant sur une pédale de frein F33 et / ou sous la forme de signaux électriques de commande.

Selon un aspect essentiel de l'invention, la source de fluide haute pression F1 comprend la portion KC1 du circuit de climatisation K qui, dans le sens de circulation X du fluide réfrigérant à l'intérieur du circuit de climatisation K, est disposée en aval du compresseur K1 et en amont du détendeur K2, et qui inclut avantageusement elle-même un accumulateur haute pression KS1.

Par ailleurs, la source de fluide basse pression F2 comprend de préférence la portion KC2 du circuit de climatisation qui, dans le sens de circulation X du fluide réfrigérant, est disposée en aval du détendeur K2 et en amont du compresseur K1, et qui inclut avantageusement elle-même un accumulateur basse pression KS2.

En variante, on utilise un servomoteur à chambre unique fermée par une paroi mobile soumise sur l'une de ses faces à la pression atmosphérique et sur son autre face à la pression régnant dans la chambre. Le clapet relie la chambre unique à la source de fluide haute pression F1 ou à la source de fluide basse pression F2 en fonction de l'intensité souhaitée du freinage.

Dans le cas préféré où le clapet F31 du servomoteur F3 est actif, il adopte par exemple un premier état, dans lequel il relie la chambre de travail F30 à la source haute pression F1, en réponse à la réception d'un signal d'actionnement Sact placé dans un premier état Sact1, tandis qu'il adopte un second état, dans lequel il relie la chambre de travail F30 à la source basse pression F2, en réponse à la réception du signal d'actionnement Sact placé dans un second état Sact2.

Dans le cas le plus traditionnel, un dispositif de freinage utilisable dans le cadre de l'invention comprend deux moteurs hydrauliques de frein arrière, F4 et F5, qui sont mus par le servomoteur F3 agissant sur ces moteurs par l'intermédiaire d'un maître-cylindre hydraulique F32.

Les moteurs de frein F4 et F5 adoptent ainsi à volonté un état actif correspondant à un verrouillage mécanique du frein de parking associé à chaque moteur, ou un état passif correspondant à un déverrouillage de frein de parking associé à chaque moteur, et incluent par exemple des capteurs respectifs propres à émettre des signaux respectifs E4 et E5, par exemple électriques, rendant compte de ces différents états.

Dans un mode de réalisation avantageux, le dispositif de l'invention peut en outre comprendre un générateur Gcom de signal de commande et un circuit Clog de combinaison de signaux.

Le circuit Clog comprend lui-même une porte logique ET Clogl et une porte logique NON(ET) Clog2.

La porte logique ET Clog1 reçoit les signaux d'état E4 et E5 et produit un signal intermédiaire Slogl.

La porte logique NON(ET) Clog2, qui reçoit le signal intermédiaire Slog1 et un signal de commande Scom émis par le générateur Gcom de signal de commande, produit, en sortie du circuit Clog et à destination du clapet F31 du servomoteur F3, le signal d'actionnement Sact dans son premier état Sact1 en réponse à la détection simultanée du signal de commande Scom et de l'état passif E4p et E5p des moteurs de frein F4 et F5.

Le fonctionnement du dispositif tel que décrit jusqu'à présent est le suivant.

Lorsqu'il souhaite immobiliser le véhicule en stationnement prolongé, le conducteur de ce véhicule déclenche le générateur Gcom, qui délivre aussitôt un signal de commande Scom.

Les moteurs de frein F4 et F5 étant alors supposés au repos, les signaux d'état E4 et E5 sont à un niveau bas, de même que le signal intermédiaire Slogl.

La porte NON(ET) Clog2, qui reçoit le signal Scom au niveau haut et le signal Slog1 au niveau bas, délivre le signal d'actionnement Sact dans son premier état Sact1.

A réception du signal d'actionnement Sact dans son premier état Sact1, le clapet F31 relie la chambre de travail F30 à la source F1 de haute pression, ce qui provoque l'actionnement du servomoteur F3 et celui des moteurs de freins F4 et F5.

Lorsque les moteurs de freins F4 et F5 ont atteint leur état actif, correspondant par exemple au verrouillage mécanique de frein de parking, le signal intermédiaire Slog1 passe au niveau haut. '

Comme entre-temps le générateur Gcom a cessé de produire le signal de commande Scom, la porte NON(ET) Clog2 arrête de délivrer le signal d'actionnement Sact dans son premier état Sact1, dès que les deux moteurs de frein F4 et F5 ont effectué le verrouillage de frein de parking.

Cependant, dès que le générateur Gcom est une nouvelle fois actionné par le conducteur, le signal Scom qu'il émet fait basculer la porte Clog2 en raison du niveau haut du signal Slog1, le signal Sact se plaçant ainsi dans son second état Sact2, établissant la communication entre la chambre de travail F30 et la source de basse pression F2, et provoquant le retour du servomoteur F3 dans sa position de repos.

## Revendications

1. Dispositif de freinage pour un véhicule automobile équipé d'un circuit de climatisation (K) renfermant un fluide réfrigérant, un compresseur (K1) et un détendeur (K2), ce dispositif incluant lui-même une première source de fluide (F1) délivrant sélectivement un fluide gazeux à pression relativement élevée, une seconde source de fluide (F2) délivrant sélectivement le fluide gazeux à pression relativement basse, et un servomoteur pneumatique d'assistance au freinage (F3) comprenant une chambre de travail (F30) de volume variable et un clapet de commande (F31) sélectivement actionné par une première ou une seconde sollicitations pour relier respectivement la chambre de travail (F30) à la première (F1) ou à la seconde (F2) source de fluide, **caractérisé en ce que** la première source de fluide (F1) comprend une première portion (KC1) du circuit de climatisation (K), disposée en aval du compresseur (K1) et en amont du détendeur (K2), dans un sens de circulation (X) du fluide réfrigérant dans le circuit de climatisation (K) et **en ce que** la seconde source de fluide (F2) comprend une seconde portion (KC2) du circuit de climatisation, disposée en aval du détendeur (K2) et en amont du compresseur (K1) dans le sens de circulation (X) du fluide réfrigérant.

2. Dispositif de freinage suivant la revendication précédente, **caractérisé en ce que** la première portion (KC1) du circuit de climatisation comprend un accumulateur haute pression (KS1).

3. Dispositif de freinage suivant l'une quelconque des revendications précédentes, **caractérisé en ce que** la seconde portion (KC2) du circuit de climatisation comprend un accumulateur basse pression (KS2).

4. Dispositif de freinage suivant l'une quelconque des revendications précédentes, **caractérisé en ce que** le clapet (F31) est sensible à un signal d'actionnement (Sact) présentant sélectivement au moins un premier état (Sact1) ou un second état (Sact2), et **en ce que** les premier et second états (Sact1, Sact2) du signal d'actionnement (Sact) constituent respectivement les première et seconde sollicitations pour le clapet (F31).

5. Dispositif de freinage suivant la revendication **4, caractérisé en ce qu'**il comprend au moins deux moteurs de frein (F4, F5) mus par le servomoteur (F3) et adoptant sélectivement un état mécaniquement verrouillé du frein de parking ou un état passif sans verrouillage mécanique du frein de parking, un générateur (Gcom) de signal de commande propre à produire sélectivement un signal de commande (Scom), et un circuit (Clog) de combinaison de signaux, ce circuit de combinaison de signaux délivrant au clapet (F31) le signal d'actionnement (Sact) dans son premier état (Sact1) en réponse à la détection simultanée du signal de commande (Scom) et de l'état sans verrouillage mécanique du frein de parking des moteurs de frein (F4, F5).

## Claims

1. Braking device for a motor vehicle fitted with an air conditioning circuit (K) containing a cooling fluid, a compressor (K1) and an expansion valve (K2), this device itself including a first source of fluid (F1) selectively delivering a gaseous fluid at a relatively high pressure, a second source of fluid (F2) selectively delivering the gaseous fluid at a relatively low pressure, and a pneumatic brake booster (F3) comprising a variable volume working chamber (F30) and a control valve (F31) selectively actuated by a first or a second impulse to connect respectively the working chamber (F30) to the first (F1) or to the second (F2) source of fluid, **characterized in that** the first source of fluid (F1) comprises a first portion (KC1) of the air conditioning circuit (K), placed downstream of the compressor (K1) and upstream of the expansion valve (K2), in one direction of flow (X) of the cooling fluid in the air conditioning circuit (K) and **in that** the second source of fluid (F2) comprises a second portion (KC2) of the air conditioning circuit, placed downstream of the expansion valve (K2) and upstream of the compressor (K1) in the direction of flow (X) of the cooling fluid.

2. Braking device according to the preceding claim, **characterized in that** the first portion (KC1) of the air conditioning circuit comprises a high pressure accumulator (KS1).

3. Braking device according to either of the preceding claims, **characterized in that** the second portion (KC2) of the air conditioning circuit comprises a low pressure accumulator (KS2).

4. Braking device according to any one of the preceding claims, **characterized in that** the valve (F31) is sensitive to an actuation signal (Sact) having selectively at least a first state (Sact1) or a second state (Sact2) and **in that** the first and second states (Sact1, Sact2) of the actuation signal (Sact) constitute respectively the first and second impulses for the valve (F31).

5. Braking device according to Claim 4, **characterized in that** it comprises at least two brake motors (F4, F5) moved by the booster (F3) and selectively adopting a mechanically locked state of the parking brake or a passive state without mechanical locking of the parking brake, a control signal generator (Gcom) suitable for selectively producing a control signal (Scom) and a signal combining circuit (Clog), this signal combining circuit delivering to the valve (F31) the actuation signal (Sact) in its first state (Sact1) in response to the simultaneous detection of the control signal (Scom) and of the mechanically unlocked state of the parking brake of the brake motors (F4, F5).

## Patentansprüche

1. Bremsvorrichtung für ein Kraftfahrzeug, das mit einem Klimatisierungskreis (K) ausgestattet ist, welches ein Kühlfluid, einen Verdichter (K1) und ein Druckminderventil (K2) umfasst, wobei diese Vorrichtung selbst eine erste Fluidquelle (F1), die selektiv ein gasförmiges Fluid mit relativ hohem Druck liefert, eine zweite Fluidquelle (F2), die selektiv das gasförmige Fluid mit relativ niedrigem Druck liefert, und einen pneumatischen Servomotor zur Bremsunterstützung (F3) aufweist, der eine Arbeitskammer (F30) mit variablem Volumen und ein Steuerventilelement (F31) aufweist, welches selektiv durch eine erste oder eine zweite Beaufschlagung betätigt wird, um die Arbeitskammer (F30) mit der ersten Fluidquelle (F1) bzw. mit der zweiten Fluidquelle (F2) zu verbinden, **dadurch gekennzeichnet, dass** die erste Fluidquelle (F1) einen ersten Abschnitt (KC1) des Klimatisierungskreises (K) aufweist, der in einer Zirkulierungsrichtung (X) des Kühlfluids im Klimatisierungskreis (K) stromabwärts des Verdichters (K1) und stromaufwärts des Druckminderventils (K2) angeordnet ist, und dass die zweite Fluidquelle (F2) einen zweiten Abschnitt (KC2) des Klimatisierungskreises aufweist, der in der Zirkulationsrichtung (X) des Kühlfluids stromabwärts des Druckminderventils (K2) und stromaufwärts des Verdichters (K1) angeordnet ist.

2. Bremsvorrichtung nach dem vorhergehenden Anspruch, **dadurch gekennzeichnet, dass** der erste Abschnitt (KC1) des Klimatisierungskreises einen Hochdruckspeicher (KS1) aufweist.

3. Bremsvorrichtung nach einem der vorhergehenden Ansprüche, **dadurch gekennzeichnet, dass** der zweite Abschnitt (KC2) des Klimatisierungskreises einen Niederdruckspeicher (KS2) aufweist.

4. Bremsvorrichtung nach einem der vorhergehenden Ansprüche, **dadurch gekennzeichnet, dass** das Ventilelement (F31) auf ein Betätigungssignal (Sact) ansprechend ist, das selektiv mindestens einen ersten Zustand (Sact1) oder einen zweiten Zustand (Sact2) hat, und dass der erste und der zweite Zustand (Sact1, Sact2) des Betätigungssignals (Sact) die erste bzw. die zweite Beaufschlagung für das Ventilelement (F31) bilden.

5. Bremsvorrichtung nach Anspruch 4, **dadurch gekennzeichnet, dass** sie mindestens zwei Bremsmotoren (F4, F5) aufweist, die von dem Servomotor (F3) betätigt werden und selektiv einen mechanisch verriegelten Parkbrems-Zustand oder einen passiven Parkbrems-Zustand ohne mechanische Verriegelung annehmen, eine Steuersignalerzeugungseinrichtung (Gcom), die selektiv ein Steuersignal (Scom) erzeugen kann, und einen Signalverknüpfungskreis (Clog), wobei dieser Signalverknüpfungskreis als Reaktion auf die gleichzeitige Erfassung des Steuersignals (Scom) und des Parkbrems-Zustands ohne mechanische Verriegelung der Bremsmotoren (F4, F5) das Betätigungssignal (Sact) in seinem ersten Zustand (Sact1) zum Ventilelement (F31) leitet.
